# EUROPEAN PATENT SPECIFICATION

(11) **EP 2 490 234 B1**
(45) Date of publication and mention of the grant of the patent: **11.04.2018**
(21) Application number: 10823239.8
(22) Date of filing: 04.08.2010
(51) Int. Cl.: H01G 9/008, H01G 9/012, H01G 9/145, H01G 9/15

(54) **TAB TERMINAL FOR ELECTROLYTIC CAPACITOR**
FLACHSTECKERANSCHLUSS FÜR EINEN ELEKTROLYSEKONDENSATOR
COSSE À LANGUETTE POUR CONDENSATEUR ÉLECTROLYTIQUE

(30) Priority: 13.10.2009 JP 2009236341
(43) Date of publication of application: 22.08.2012
(73) Proprietor: Kohoku Kogyo Co., Ltd., Nagahama-shi, Shiga 529-0241 (JP)
(72) Inventor: YOSHIZAWA Shuhei, Nagahama-shi Shiga 529-0241 (JP); YOKOHAMA Yoshio, Nagahama-shi Shiga 529-0241 (JP); ARAKI Haruhito, Nagahama-shi Shiga 529-0241 (JP); ISHII Futoshi, Nagahama-shi Shiga 529-0241 (JP)
(74) Representative: Potter Clarkson LLP
(86) International application number: PCT/JP2010/063164
(87) International publication number: WO 2011/045971

(56) References cited:
- JP-A- 11 199 639
- JP-A- H11 199 639
- JP-A- 2002 129 843
- JP-A- 2007 335 714
- JP-A- 2007 335 714
- JP-A- 2008 130 782
- US-A- 4 073 835
- US-A- 4 271 258

## Description

### Technical Field

The present invention relates to a tab terminal for use in electrolytic capacitors and more specifically relates to a lead-free tin-plated tab terminal, and a process for producing the same.

### Background Art

Electrolytic capacitors are produced by winding an anode electrode foil and a cathode electrode foil each comprising a metal having valve action, such as tantalum or aluminum, through a separator to form a capacitor element, holding a liquid electrolyte or a solid electrolyte in the capacitor element, and housing the assembly in an outer casing. Tab terminals for connecting the respective electrodes to the outside are joined to the anode electrode foil and the cathode electrode foil, respectively, by known means such as stitch bonding or ultrasonic welding.

A tab terminal for an electrolytic capacitor has a structure comprising an aluminum core wire having a press flattened portion and a lead wire welded to each other. The tab terminal in its portion to be jointed to the electrode foil is pressed to constitute a press flattened portion which is wound within a winding-type capacitor element. On the other hand, the portion to be inserted through a sealed body that hermetically seals an outer case is formed of an aluminum core wire from the viewpoints of ensuring sealing between the portion and the sealed body and mechanical strength. A lead-out portion mounted on a circuit board is formed of a flexible lead wire from the viewpoint of ensuring handleability in mounting.

The tab terminal composed of the three portions is generally prepared by welding two members to each other. Specifically, the tab terminal is prepared by welding a lead wire to an aluminum core wire with a press flattened portion. An electrolytic capacitor is mounted on a circuit board with solder, and, hence, for solderability improvement purposes, a lead wire having in its surface a tin plating or a lead-containing tin plating is used.

On the other hand, in recent years, in consideration of environmental problems, the development of techniques using lead-free solder for freeing of lead in electrode terminals of electronic components or for joining of electronic components has become undertaken. Also in a lead wire for use as electronic members, instead of a conventional lead-containing tin plating, a tin plating not using lead, that is, the so-called "lead-free tin plating," has become used. Tab terminals using the above lead wire with a lead-free tin plating suffer from a problem of the production of tin whiskers at the weld between the aluminum core wire part and the lead wire part. Since tin whisker grows with the elapse of time, even when the whisker is removed immediately after the production of the tab terminal, the whisker grows gradually after the removal of the whisker. Therefore, after mounting of the electrolytic capacitor onto a circuit board, whiskers produced from the anode-side lead wire are joined to whiskers produced from the cathode-side lead wire, or the whisker produced in the lead wire part reaches the surface of the circuit board, leading to a fear of increasing leakage current of the electrolytic capacitor and causing shortcircuiting.

Regarding these problems, in order to suppress the production of tin whiskers from the weld, Japanese Patent Application Laid-Open No. 67146/2007 proposes a technique in which a heat curable resin composition is coated onto a portion in the vicinity of a weld zone from which whiskers are produced followed by heat treatment to cover the vicinity of the weld zone with a resin. Since, however, heat curable resins typified by epoxy resins and the like generally contain halogens such as chlorine, the above technique may pose an environmental problem in a tab terminal manufacturing process or in the disposal of electronic materials such as capacitors using tab terminals. Accordingly, in manufacturers of capacitors, there is a demand for environmentally friendly halogen-free electronic members.

JP 2007 335714 A discloses the suppression of the generation of whisker due to tin in a lead wire in a capacitor. The capacitor is constituted by housing a lead wire which has a lead plate made planar by rolling at one end of an aluminum round rod, and connects a CP line of a tin-plated copper clad steel line by welding to the other end of the round rod; and a capacitor element which is wound, so that a positive electrode and a negative electrode constituted by connecting an electrode to the lead plate of the lead wire face each other via a separator. These two elements are housed in a case with a driving electrolytic solution, and the capacitor thus obtained is provided with a water-proof film in a welded zone wherein the CP line is connected to the round rod by welding.

### DISCLOSURE OF THE INVENTION

### Problems to be Solved by the Invention

The present inventors have now found that covering of a portion in the vicinity of a weld zone between a lead wire and an aluminum core wire with a specific resin can realize the suppression of the production of whiskers and, at the same time, can realize environmentally friendly tab terminals. The present invention has been made based on such finding.

Accordingly, an object of the present invention is to provide a tab terminal that, even when a lead-free tin-plated lead wire as such is used in a tab terminal, does not produce tin whiskers from a weld zone and is environmentally friendly, and a method for manufacturing the same.

### Means for Solving the Problems

According to a present invention, there is provided a tab terminal for an electrolytic capacitor comprising: a lead wire having a lead-free tin-plated surface; and an aluminum core wire that has a press flattened portion and is welded to the lead wire, characterized in that
a portion in the vicinity of a weld zone between the lead wire and the aluminum core wire is covered with an ultraviolet cured resin,
wherein the ultraviolet cured resin is formed by irradiating an ultraviolet curable resin composition composed mainly of a urethane acrylate and a (meth)acrylate and a solvent containing an inorganic acid salt.

In an embodiment of the present invention, preferably, the covering is provided at a weld padding portion, and the weld padding portion is covered with the ultraviolet cured resin to such an extent that the weld padding portion does not bulge from the outer diameter of the aluminum core wire.

In an embodiment of the present invention, preferably, the ultraviolet cured resin is substantially free from a halogen.

In an embodiment of the present invention, preferably, the ultraviolet cured resin contains 40 to 55% by mass of the urethane acrylate and 20 to 40% by mass of the (meth)acrylate.

According to another aspect of the present invention, there is provided a method for manufacturing the above tab terminal, characterized by comprising:
providing a tab terminal for an electrolytic capacitor, the tab terminal comprising: a lead wire having a lead-free tin-plated surface; and an aluminum core wire that has a press flattened portion and is welded to the lead wire;
coating a composition for an ultraviolet cured resin onto a portion in the vicinity of a weld zone between the lead wire and the aluminum core wire, wherein the composition for an ultraviolet cured resin comprises a copolymer resin composed mainly of a urethane acrylate and a (meth)acrylate and a solvent containing an inorganic acid salt; and
irradiating the coated portion with ultraviolet light to form a covering formed of the ultraviolet cured resin.

In an embodiment of the present invention, preferably, the coating and the ultraviolet irradiation are carried out while turning the lead wire.

In an embodiment of the present invention, preferably, the composition for an ultraviolet cured resin further comprises an anaerobic curing accelerator.

In an embodiment of the present invention, preferably, when the outer diameter of the lead wire is not less than 0.6 mm, a composition, which comprises 45 to 55% by mass of the urethane acrylate and 20 to 30% by mass of the (meth)acrylate and has a viscosity of 15,000 to 30,000 mPa·s, is used as the composition, for an ultraviolet cured resin, to be coated onto the portion in the vicinity of the weld zone, while, when the outer diameter of the lead wire is less than 0.6 mm, a composition, which comprises 40 to 50% by mass of the urethane acrylate and 30 to 40% by mass of the (meth)acrylate and has a viscosity of 5,000 to 15,000 mPa·s, is used as the composition, for an ultraviolet cured resin, to be coated onto the portion in the vicinity of the weld zone.

In an embodiment of the present invention, preferably, the composition for an ultraviolet cured resin comprises 1.0 to 5.0% by mass of a photopolymerizer.

In an embodiment of the present invention, preferably, the solvent containing an inorganic acid salt is selected from the group consisting of borates, condensed phosphates, bicarbonates, carbonates, silicates, sulfates, and a mixture of them.

According to a further aspect of the present invention, there is provided an aluminum electrolytic capacitor using the above tab terminal.

### EFFECT OF THE INVENTION

In the present invention, since the surface of a weld zone that is located between an aluminum core wire and a lead wire and is a whisker production site, is covered with a resin, the growth of tin whiskers from the weld zone with the elapse of time can be suppressed. Further, the use of an ultraviolet cured resin as the resin can realize a tab terminal that is substantially free from halogens and thus is environmentally friendly.

### BRIEF DESCRIPTION OF THE DRAWING

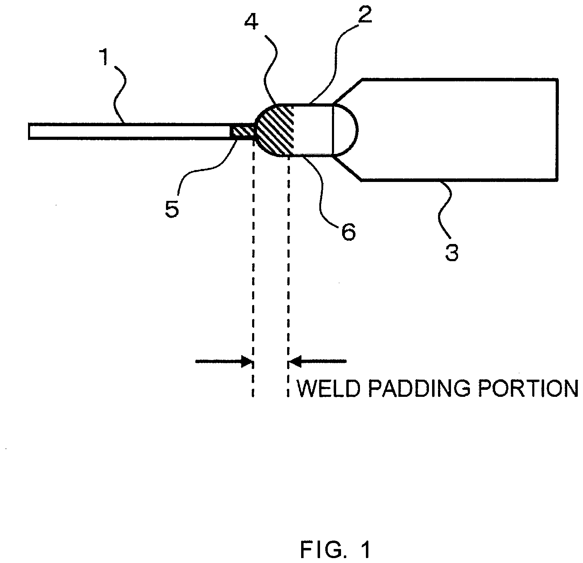

Fig. 1 is a schematic view of a tab terminal for an electrolytic capacitor according to the present invention.

### BEST MODE FOR CARRYING OUT THE INVENTION

The tab terminal according to the present
invention will be described with reference to the accompanying drawing.

Fig. 1 is a schematic view of a tab terminal for an electrolytic capacitor which is one embodiment of the present invention. As shown in Fig. 1, the tab terminal for an electrolytic capacitor according to the present invention comprises a lead wire 1 having a lead-free tin-plated surface and an aluminum core wire 2 welded to each other, and an end 3 of the aluminum core wire 2 is pressed into a flat form. A portion in the vicinity of a weld zone (a weld zone vicinity portion 4) between the lead wire 1 and the aluminum core wire 2 is covered with an ultraviolet cured resin (a shaded area in the drawing). Here the "vicinity portion" means that not only a weld padding portion formed by welding between the lead wire 1 and the aluminum core wire 2 but also a lead wire portion 5 and an aluminum core wire portion 6 extended from the weld padding portion may be covered with the resin. In the tab terminal using the lead wire 1 plated with lead-free tin is likely to cause the growth of whiskers from weld padding vicinity portions (4 to 6), and, thus, preferably, the weld padding portion is covered with the resin.

For example, a CP wire (a lead-in wire) or the like having a lead-free tin-plated surface is suitable as the lead wire. The thickness and length of the lead wire are also not particularly limited, and various CP wires can be used depending upon properties required of electrolytic capacitors. A wire of iron with copper formed on the circumference thereof or a copper wire per se is usually used as a CP wire, from the viewpoint of electrical conductivity characteristics.

The aluminum core wire constituting the tab terminal according to the present invention may also be an aluminum core wire used in conventional tab terminals and may be commercially available one. The aluminum core wire functions as an electrode in an electrolytic capacitor, and one end thereof is in a flatly pressed form. The press flattened portion can be formed by a prior art technique. For example, an aluminum core wire having a press flattened portion with a predetermined shape can be prepared by pressing an aluminum core wire and cutting the pressed product into a predetermined shape. The step of cutting the press flattened portion into a predetermined shape can also be carried out simultaneously with pressing.

The lead wire and the aluminum core wire can be joined to each other by a conventional method to form a tab terminal shape. For example, the aluminum core wire and the lead wire can be joined to each other by creating a high temperature state, for example, through spark discharge or plasma discharge, melting both the end of the aluminum core wire and the end of the lead wire and joining them to each other.

After the tab terminal for an electrolytic capacitor is provided by welding the aluminum core wire having a press flattened portion to the lead wire having a lead-free tin-plated surface by the above method, a composition for an ultraviolet cured resin is coated in the vicinity of a weld zone between the lead wire and the aluminum core wire followed by ultraviolet irradiation to cure the resin composition and thus to form a covering.

Preferably, the portion in the vicinity of the weld padding is covered with the ultraviolet cured resin to such an extent that the weld padding portion does not bulge from the outer diameter of the aluminum core wire 6. The aluminum core wire portion 6 becomes a portion sealed by a sealing rubber when the tab terminal is incorporated in a casing of an electrolytic capacitor followed by filling with an electrolyte. Accordingly, the resin is covered to such an extent that the resin bulges from the outer diameter of the aluminum core wire, there is a possibility that the electrolyte leaks from the sealing rubber.

The weld padding portion of the tab terminal may be coated with the ultraviolet curable resin composition by any known method without particular limitation. For example, a method may be adopted in which an ultraviolet curable resin composition is coated by roller coating or spray coating. For some coating methods applied, the viscosity of the ultraviolet curable resin composition should be properly modified. The viscosity may be generally modified by regulating the content of a solvent although the method varies depending upon the monomer or oligomer selected. Further, when the weld zone of the tab terminal is coated with the resin composition by the above coating method, the viscosity of the resin composition should be properly modified so that the desired area is covered with the resin. For example, when a roller coating method is used, the viscosity of the ultraviolet curable resin composition adopted is approximately 5,000 to 30,000 mPa·s.

In the step of coating the ultraviolet curable resin composition, when the outer diameter of the lead wire is not less than 0.6 mm, preferably, the ultraviolet curable resin composition to be coated onto a portion in the vicinity of the weld zone comprises 45 to 55% by mass of a urethane acrylate and 20 to 30% by mass of an (meth)acrylate and has a viscosity of 15,000 to 30,000 mPa·s. The use of the resin composition having the above viscosity can realize the formation of an uniform covering free from liquid sagging and coating spots. On the other hand, when the outer diameter of the lead wire is less than 0.6 mm, preferably, the ultraviolet curable resin composition to be coated onto a portion in the vicinity of the weld zone comprises 40 to 50% by mass of a urethane acrylate and 30 to 40% by mass of an (meth)acrylate and has a viscosity of 5,000 to 15,000 mPa·s. The use of the resin composition having the above viscosity can realize the formation of an uniform covering free from liquid sagging and coating spots.

After the ultraviolet curable composition is coated onto the weld padding portion of the tab terminal, the coated portion is irradiated with ultraviolet light to cure the resin composition to form a covering. The ultraviolet irradiation may be carried out with a known apparatus. An ultraviolet irradiation apparatus having an irradiation wavelength range of approximately 250 nm to 450 nm may be used although the apparatus used varies depending upon the type of a photopolymerization initiator added into the composition. Upon the exposure to ultraviolet light, the ultraviolet curable resin composition starts to polymerize and is cured with high sensitivity and in a very short time to form a resin covering. When a conventional epoxy resin is used, the provision of a heat treatment step is necessary in which, after coating of the resin composition onto the tab terminal, the coated tab terminal is heated. By contrast, according to the present invention, the heat treatment step is not necessary, and what is required after coating of the resin composition is only to irradiate the coated tab terminal with ultraviolet light for resin covering formation, contributing to a simplified manufacturing process. Further, an anaerobic curing accelerator and a curing catalyst may be used in combination with the ultraviolet curable composition to further shorten the resin curing time. When such resin composition is used, a fast drying and uniform resin film can be obtained.

In the present invention, the covering of the ultraviolet cured resin is formed by irradiating an ultraviolet curable resin composition comprising an urethane acrylate and an (meth)acrylate as main components with ultraviolet light to cure the resin composition.

Preferably, the coating of the ultraviolet curable resin composition and the ultraviolet irradiation are performed while turning the lead wire of the tab terminal. When the coating of the ultraviolet curable resin composition and the ultraviolet irradiation are performed while turning the lead wire, a more uniform covering is formed and, at the same time, the covering can be formed so that the covering does not bulge from the outer diameter of the aluminum core wire.

Urethane acrylates include, but are not limited to, polyester urethane acrylates, polyether urethane acrylates, polybutadiene urethane acrylates, and polyol urethane acrylates. The urethane acrylate to be used is an oligomer having a molecular weight range of approximately 500 to 20,000, preferably approximately 500 to 10,000. The content of the urethane acrylate in the ultraviolet curable resin composition is preferably 40 to 55% by mass. As described above, however, preferably, when the outer diameter of the lead wire is not less than 0.6 mm, the content of the urethane acrylate is in the range of 45 to 55% by mass, while, when the outer diameter of the lead wire is less than 0.6 mm, the content of the urethane acrylate is in the range of 40 to 50% by mass.

The (meth)acrylate contained in the ultraviolet curable resin composition means an acrylate or a methacrylate, and (meth)acrylates include, but are not limited to, for example, ethylene glycol di(meth)acrylate, propylene glycol di(meth)acrylate, butylene glycol di(meth)acrylate, neopentyl glycol di(meth)acrylate, hexanediol (meth)acrylate, trimethylolethane di(meth)acrylate, trimethylolethane tri(meth)acrylate, pentaerythritol tri(meth)acrylate, pentaerythritol tetra(meth)acrylate, pentaerythritol penta(meth)acrylate, pentaerythritol hexa(meth)acrylate, and glyceryl tri(meth)acrylate. The content of the (meth)acrylate in the ultraviolet curable resin composition is preferably 35 to 45% by mass.

A photopolymerization initiator may be contained in the ultraviolet curable resin composition. The photopolymerization initiator absorbs ultraviolet light, for example, in a wavelength range of approximately 250 nm to 450 nm and generates radicals or ions to start polymerization of the oligomer and monomer. Photopolymerization initiators include, but are not limited to, for example, benzoin methyl ether, benzoin ethyl ether, isopropyl benzoin ether, isobutyl benzoin ether, 1-phenyl-1,2-propanedione-2-(o-ethoxycarbonyl)oxime, benzyl, diethoxyacetophenone, benzophenone, chlorothioxanthone, 2-chlorothioxanthone, isopropylthioxanthone, 2-methylthioxanthone, polyphenyl polychloride, and hexachlorobenzene. Preferred are isobutyl benzoin ether and 1-phenyl-1,2-propanedione-2-(o-ethoxycarbonyl)oxime. Commercially available photopolymerization initiators can also be used, such as those available under the trade names, e.g., Vicure 10 and 30 (produced by Stauffer Chemical Co.), Irgacure 184, 651, 2959, 907, 369, 1700, 1800, 1850 and 819 (produced by Ciba Specialty Chemicals, Inc.), Darocure 1173 (produced by EM Chemical), Quantacure CTX and ITX (produced by Aceto Chemical Co.), and Lucirin TPO (produced by BASF). The content of the polymerization initiator is 0.5 to 5.0% by mass, preferably 1.0 to 5.0% by mass, based on the ultraviolet curable resin composition.

The ultraviolet curable resin composition comprising the urethane acrylate and the (meth)acrylate as main components is free from halogens such as chlorine and, thus, even when used for covering of a portion in the vicinity of a weld zone of the tab terminal, does not cause an environmental problem, and can effectively suppress the production of whiskers from the tab terminal. Commercially available compositions may be used as the ultraviolet curable resin composition, and examples of suitable commercially available compositions include Chemiseal U-426 (produced by Chemitech) and Acetite AS-2016 (produced by ASEC).

Ethylene glycol-containing electrolytes have hitherto been used as electrolytes for electrolytic capacitors. In recent years, however, electrolytes containing γ-butyrolactone and the like are sometimes used. The above resins are substantially free from halogens and further can provide coverings that are highly strong and durable. In some cases, however, the resin is swollen by γ-butyrolactone, and the covering provided in the vicinity of the weld padding is disadvantageously separated from the tab terminal. When the tab terminal is used in an electrolytic capacitor filled with an electrolyte containing γ-butyrolactone, an ultraviolet curable resin composition using a modified acrylate oligomer as the (meth)acrylate is preferred as the ultraviolet curable resin. For example, commercially available ultraviolet curable resin compositions such as Aronix LCR0136 (produced by TOAGOSEI CO., LTD.: viscosity 20,000 mPa·s) are suitable as the resin.

The resin composition may contain an anaerobic curing accelerator. The addition of the anaerobic curing accelerator can contribute to an increased curing speed and can realize the formation of a uniform covering. Conventional known anaerobic curing accelerators may be used.

In the present invention, preferably, the ultraviolet curable resin composition may further contain an inorganic acid salt selected from the group consisting of borates, condensed phosphates, bicarbonates, carbonates, silicates, sulfates, and a mixture of them. When the inorganic acid salt-containing ultraviolet curable resin composition is used, the production of whiskers can be more effectively suppressed.

It is known that epoxy resins have high adhesion to metals (aluminum) while acrylate ultraviolet curable resins have low adhesion to metals. As described above, when a covering of an acrylate ultraviolet cured resin instead of the conventional epoxy resin covering is provided in the vicinity of the weld padding of the tab terminal, there is a possibility that the adhesion between the aluminum portion and the covering is low. In the present invention, the addition of the inorganic acid salt into the ultraviolet curable resin composition can realize high adhesion of the covering even when the acrylate ultraviolet curable resin is used. This effect has been unexpected at all. The reason why the addition of a predetermined inorganic acid salt can contribute to enhanced adhesion of the covering has not been elucidated but is believed to be as follows. Specifically, when the resin composition containing a predetermined inorganic acid salt is coated onto a weld padding portion of the aluminum core wire, the surface of aluminum is etched by the inorganic acid salt to form fine concaves and convexes, contributing to the formation of a covering having good adhesion to aluminum when the acrylate ultraviolet curable resin is used.

When the ultraviolet curable resin composition contains the inorganic acid salt, preferably, a resin composition is coated in the vicinity of a weld zone between the lead wire and the aluminum core wire at a temperature of approximately 60 to 100°C. When the resin composition is coated in this temperature range, the etching effect of the aluminum surface can be further enhanced and, thus, a resin covering having excellent adhesion can be formed. Further, in the present invention, before coating of the ultraviolet curable resin composition onto the weld padding portion of the tab terminal, the tab terminal may be previously cleaned with a solution of an inorganic acid salt. Preferably, the tab terminal is cleaned with the inorganic acid salt solution at a temperature of approximately 60 to 100°C. As described above, when the tab terminal is previously cleaned with the inorganic acid salt solution, the surface of aluminum is etched to form fine concaves and convexes, contributing to a resin covering having excellent adhesion. Further, in the present invention, subsequent to the step of cleaning with the inorganic acid salt solution, an ultraviolet curable resin composition containing an inorganic acid salt may be coated.

In the present invention, an inorganic acid salt selected from the group consisting of silicates, borates, condensed phosphates, sulfates, carbonates, bicarbonates, ammonium borate, ammonium phosphate, and a mixture of two or more of them is suitable. Commercially available inorganic acid salts may be used, and examples of suitable commercially available inorganic acid salts include Fine Cleaner FC315 (NIHON PARKERIZING CO., LTD.). The content of the inorganic acid salt is 0.1 to 5% by mass, preferably 0.5 to 2% by mass.

In the tab terminal, microvoids having a depth of about 50 µm are present on the surface of a weld zone (a weld padding portion) between the lead wire and the aluminum core wire. When the ultraviolet curable resin composition is coated in the weld zone of the tab terminal and the portion in the vicinity of the weld zone followed by curing of the coating, the microvoids and the like present in the surface of the weld zone are filled with the resin, whereby the production of whiskers is suppressed and, at the same time, the smoothness of the surface of the resin covering is improved.

### EXAM PLES

### Example 1

A copper wire of 0.6 mmφ plated with lead-free tin (plating thickness 12 µm) was provided as a lead wire member, and the copper wire was cut into 20-mm length. Further, an aluminum wire of 1.2 mmφ was provided as an aluminum core wire, and the aluminum core wire was cut into 9-mm length. Subsequently, the lead wire and the aluminum core wire each cut into respective predetermined lengths were held on the electrodes of an arc welding device. In this state, the lead wire and the aluminum core wire are pressed, and welding was performed by plasma discharge (voltage about 50 V) to join the lead wire and the aluminum core wire to each other. Thereafter, the end of the aluminum core wire is pressed for flattening to form a press flattened portion. Thus, a tab terminal for an electrolytic capacitor was obtained.

Chemiseal U-426B (produced by Chemitech) containing 1.0% by mass of Fine Cleaner FC315 (produced by NIHON PARKERIZING CO., LTD.) which is an inorganic acid salt solution was provided as an ultraviolet curable resin composition. The provided ultraviolet curable resin composition was coated on the weld padding portion of the tab terminal, and the coated portion was irradiated with ultraviolet light with an ultraviolet irradiation apparatus to cure the composition and thus to cover the weld padding portion with the resin.

### Example 2

A tab terminal was prepared in the same manner as in Example 1, except that the above ultraviolet curable resin composition, Aronix LCR0136 (produced by TOAGOSEI CO., LTD.) was used instead of Chemiseal U-426B.

### Comparative Example 1

A tab terminal was prepared in the same manner as in Example 1, except that Chemiseal E-5201H (produced by Chemitech) which is an epoxy resin was used as the resin. Further, an electrolytic capacitor was prepared using this tab terminal.

### <Evaluation of tab terminals>

Electrolytic capacitors were prepared using the tab terminals that had been covered with the resin by the above method. Leak current and the service life of an electrolyte were examined for the capacitors. The tab terminals were placed under a high temperature and high humidity environment (60°C × 90% RH) to perform an acceleration test (4250 hr) for whisker growth.

Further, for resin-covered tab terminals, the content of halogen in the tab terminal was determined by a method according to BS EN 14582:2007.

The tab terminals were immersed in a γ-butyrolactone solution and, in this state, was allowed to stand at 20°C for 16 hr. Thereafter, the tab terminals were visually inspected for separation of the covered portion in the tab terminal.

### <Evaluation results>

For the tab terminals of Examples 1 to 2 and Comparative Example 1, the results of the test on the occurrence of whiskers, the results of the test on leak current for the electrolytic capacitor and the service life of the electrolyte, and the halogen content and the proofness to the γ-butyrolactone (GBL) solution were as shown in Table 1 below.

**[Table 1]**

| | Example 1 | Example 2 | Comparative Example 1 |
|---|---|---|---|
| Whisker acceleration test (whisker length, µm) | 0 | 0 | 100-300 |
| Service life of electrolyte | 50 years | 50 years | Approximately 6 months to 1 year |
| Leak current (mA) | 0 | 0 | 20 mA |
| Halogen content (mg/kg) | 0 | 0 | 256 |
| Proofness to GBL solution | Separated | Not separated | Separated |

As is apparent from the results shown in Table 1, for the tab terminal covered with the specific ultraviolet cured resin rather than the epoxy resin, the occurrence of whiskers could have been more effectively suppressed. Further, since the ultraviolet curable resin is free from halogens such as chlorine, as compared with the tab terminal covered with the chlorine-containing epoxy resin (Comparative Example 1), the service life of the electrolyte in the electrolytic capacitor is prolonged and the occurrence of leak current is suppressed. Furthermore, for the tab terminal with a covering formed using a resin composition containing a modified acrylate monomer (Example 2), the proofness to a γ-butyrolactone solution was also good.

### Description of Rererence Characters

- 1: lead wire
- 2: aluminum core wire
- 3: end of aluminum core wire
- 4: weld zone vicinity portion

## Claims

1. A tab terminal for an electrolytic capacitor comprising: a lead wire (1) having a lead-free tin-plated surface; and an aluminum core wire (2) that has a press flattened portion (3) and is welded to the lead wire (1), **characterized in that**
a portion (4) in the vicinity of a weld zone between the lead wire (1) and the aluminum core wire (2) is covered with an ultraviolet cured resin,
wherein the ultraviolet cured resin is formed by irradiating an ultraviolet curable resin composition composed mainly of a urethane acrylate and a (meth)acrylate and a solvent containing an inorganic acid salt.

2. The tab terminal according to claim 1, wherein the covering is provided at a weld padding portion.

3. The tab terminal according to claim 2, wherein the weld padding portion is covered with the ultraviolet cured resin to such an extent that the weld padding portion does not bulge from the outer diameter of the aluminum core wire (2).

4. The tab terminal according to any one of claims 1 to 3, wherein the ultraviolet cured resin is substantially free from a halogen.

5. The tab terminal according to any one of claims 1 to 4, wherein the ultraviolet cured resin contains 40 to 55% by mass of the urethane acrylate and 20 to 40% by mass of the (meth)acrylate.

6. A method for manufacturing a tab terminal according to any one of claims 1 to 5, the method being **characterized by** comprising:
providing a tab terminal for an electrolytic capacitor, the tab terminal comprising: a lead wire (1) having a lead-free tin-plated surface; and an aluminum core wire (2) that has a press flattened portion (3) and is welded to the lead wire (1);
coating a composition for an ultraviolet cured resin onto a portion (4) in the vicinity of a weld zone between the lead wire (1) and the aluminum core wire (2), wherein the composition for an ultraviolet cured resin comprises a copolymer resin composed mainly of a urethane acrylate and a (meth)acrylate and a solvent containing an inorganic acid salt; and
irradiating the coated portion (4) with ultraviolet light to form a covering formed of the ultraviolet cured resin.

7. The method according to claim 6, wherein the coating and the ultraviolet irradiation are carried out while turning the lead wire (1).

8. The method according to claim 6, wherein the composition for an ultraviolet cured resin further comprises an anaerobic curing accelerator.

9. The method according to claim 8, wherein, when the outer diameter of the lead wire (1) is not less than 0.6 mm, a composition, which comprises 45 to 55% by mass of the urethane acrylate and 20 to 30% by mass of the (meth)acrylate and has a viscosity of 15,000 to 30,000 mPa·s, is used as the composition, for an ultraviolet cured resin, to be coated onto the portion (4) in the vicinity of the weld zone, while, when the outer diameter of the lead wire (1) is less than 0.6 mm, a composition, which comprises 40 to 50% by mass of the urethane acrylate and 30 to 40% by mass of the (meth)acrylate and has a viscosity of 5,000 to 15,000 mPa·s, is used as the composition, for an ultraviolet cured resin, to be coated onto the portion (4) in the vicinity of the weld zone.

10. The method according to any one of claims 6 to 9, wherein the composition for an ultraviolet cured resin comprises 1.0 to 5.0% by mass of a photopolymerizer.

11. The method according to any one of claims 6 to 10, wherein the solvent containing an inorganic acid salt is selected from the group consisting of silicates, borates, condensed phosphates, sulfates, carbonates, bicarbonates, ammonium borate, ammonium phosphate, and a mixture of two or more of them.

12. An aluminum electrolytic capacitor using a tab terminal according to any one of claims 1 to 5.

## Patentansprüche

1. Anschlusszunge bzw. Steckkontakt für einen Elektrolytkondensator, umfassend:
einen Zuführungsdraht (1), der eine bleifreie verzinnte Oberfläche aufweist;
und einen Aluminiumkerndraht (2), der einen flach gedrückten Abschnitt (3) aufweist und an den Zuführungsdraht (1) geschweißt ist, **dadurch gekennzeichnet, dass** einen Abschnitt (4) in der Nähe einer Schweißzone zwischen dem Zuführungsdraht (1) und dem Aluminiumkerndraht (2) von einem ultraviolettgehärteten Harz bedeckt ist,
wobei das ultraviolettgehärtete Harz durch Bestrahlen einer ultravioletthärtbaren Harzzusammensetzung gebildet wird, die hauptsächlich aus einem Urethanacrylat und einem (Meth)Acrylat und einem Lösungsmittel, das ein Salz einer anorganischen Säure enthält, zusammengesetzt ist.

2. Anschlusszunge bzw. Steckkontakt nach Anspruch 1, wobei die Beschichtung an einem Schweißnahtanschlussabschnitt bereitgestellt ist.

3. Anschlusszunge bzw. Steckkontakt nach Anspruch 2, wobei der Schweißnahtanschlussabschnitt von dem ultraviolettgehärteten Harz derart bedeckt ist, dass der Schweißnahtanschlussabschnitt sich nicht von dem äußeren Durchmesser des Aluminiumkerndrahts (2) aufwölbt.

4. Anschlusszunge bzw. Steckkontakt nach einem der Ansprüche 1 bis 3, wobei das ultraviolettgehärtete Harz im Wesentlichen frei von einem Halogen ist.

5. Anschlusszunge bzw. Steckkontakt nach einem der Ansprüche 1 bis 4, wobei das ultraviolettgehärtete Harz 40 bis 55 Masseprozent Urethanacrylat und 20 bis 40 Masseprozent (Meth)Acrylat beinhaltet.

6. Verfahren zum Herstellen einer Anschlusszunge bzw. eines Steckkontakts nach einem der Ansprüche 1 bis 5, wobei das Verfahren **dadurch gekennzeichnet ist, dass** es umfasst:
Bereitstellen einer Anschlusszunge bzw. eines Steckkontakts für einen Elektrolytkondensator, wobei die Anschlusszunge bzw. der Steckkontakt umfasst: einen Zuführungsdraht (1), der eine bleifreie verzinnte Oberfläche aufweist; und einen Alumi-Zuführungsdraht (1) geschweißt ist;
Beschichten einer Zusammensetzung für ein ultraviolettgehärtetes Harz auf einen Abschnitt (4) in der Nähe einer Schweißzone zwischen dem Zuführungsdraht (1) und dem Aluminiumkerndraht (2), wobei die Zusammensetzung für ein ultraviolettgehärtetes Harz ein Copolymerharz umfasst, das hauptsächlich aus einem Urethanacrylat und einem (Meth)Acrylat und einem Lösungsmittel, das ein Salz einer anorganischen Säure enthält, zusammengesetzt ist; und
Bestrahlen des beschichteten Abschnitts (4) mit ultraviolettem Licht, um eine Beschichtung zu bilden, die aus dem ultraviolettgehärteten Harz gebildet ist.

7. Verfahren nach Anspruch 6, wobei die Beschichtung und die ultraviolette Bestrahlung durchgeführt werden, während der Zuführungsdraht (1) gedreht wird.

8. Verfahren nach Anspruch 6, wobei die Zusammensetzung für ein ultraviolettgehärtetes Harz weiter einen anaeroben Aushärtebeschleuniger umfasst.

9. Verfahren nach Anspruch 8, wobei, wenn der äußere Durchmesser des Zuführungsdrahts (1) nicht kleiner als 0,6 mm ist, eine Zusammensetzung, die 45 bis 55 Masseprozent Urethanacrylat und 20 bis 30 Masseprozent (Meth)Acrylat beinhaltet und eine Viskosität von 15.000 bis 30.000 mPa·s aufweist, als die Zusammensetzung genutzt wird, für ein ultraviolettgehärtetes Harz, um auf den Abschnitt (4) in der Nähe der Schweißzone beschichtet zu werden, während, wenn der äußere Durchmesser des Zuführungsdrahts (1) kleiner als 0,6 mm ist, eine Zusammensetzung, die 40 bis 50 Masseprozent Urethanacrylat und 30 bis 40 Masseprozent (Meth)Acrylat beinhaltet und eine Viskosität von 5.000 bis 15.000 mPa·s aufweist, als als die Zusammensetzung genutzt wird, für ein ultraviolettgehärtetes Harz, um auf den Abschnitt (4) in der Nähe der Schweißzone beschichtet zu werden.

10. Verfahren nach einem der Ansprüche 6 bis 9, wobei die Zusammensetzung für ein ultraviolettgehärtetes Harz 1,0 bis 5,0 Masseprozent eines Photopolymerisators umfasst.

11. Verfahren nach einem der Ansprüche 6 bis 10, wobei das Lösungsmittel, das ein Salz einer anorganischen Säure enthält, ausgewählt ist aus der Gruppe bestehend aus Silikaten, Boraten, kondensierten Phosphaten, Sulfaten, Karbonaten, Bikarbonaten, Ammoniumborat, Ammoniumphosphat, und einer Mischung aus zweien oder mehreren hiervon.

12. Aluminiumelektrolytkondensator, der eine Anschlusszunge bzw. einen Steckkontakt nach einem der Ansprüche 1 bis 5 nutzt.

## Revendications

1. Cosse à languette pour un condensateur électrolytique comprenant : un fil en plomb (1) ayant une surface plaquée en étain sans plomb ; et un fil central en aluminium (2) qui a une portion aplatie à la presse (3) et est soudé au fil en plomb (1), **caractérisée en ce que**
une portion (4) à proximité d'une zone de soudure entre le fil en plomb (1) et le fil central en aluminium (2) est couverte d'une résine durcie aux ultraviolets,
dans laquelle la résine durcie aux ultraviolets est formée par l'irradiation d'une composition de résine durcissable par ultraviolets composée principalement d'un acrylate d'uréthane et d'un (méth)acrylate et d'un solvant contenant un sel d'acide inorganique.

2. Cosse à languette selon la revendication 1, dans laquelle le recouvrement est prévu au niveau d'une portion de remplissage de soudure.

3. Cosse à languette selon la revendication 2, dans laquelle la portion de remplissage de soudure est recouverte de la résine durcie aux ultraviolets à tel point que la portion de remplissage de soudure ne fait pas saillie du diamètre extérieur du fil central en aluminium (2).

4. Cosse à languette selon l'une quelconque des revendications 1 à 3, dans laquelle la résine durcie aux ultraviolets est sensiblement dépourvue d'un halogène.

5. Cosse à languette selon l'une quelconque des revendications 1 à 4, dans laquelle la résine durcie aux ultraviolets contient 40 à 55 % en masse de l'acrylate d'uréthane et 20 à 40 % en masse du (méth)acrylate.

6. Procédé de fabrication d'une cosse à languette selon l'une quelconque des revendications 1 à 5, le procédé étant **caractérisé en ce qu'**il comprend :
la fourniture d'une cosse à languette pour un condensateur électrolytique, la cosse à languette comprenant : un fil en plomb (1) ayant une surface plaquée en étain sans plomb ; et un fil central en aluminium (2) qui a une portion aplatie à la presse (3) et est soudé au fil en plomb (1) ;
le revêtement d'une composition pour une résine durcie aux ultraviolets sur une portion (4) à proximité d'une zone de soudure entre le fil en plomb (1) et le fil central en aluminium (2), dans lequel la composition d'une résine durcie aux ultraviolets comprend une résine de copolymère composée principalement d'un acrylate d'uréthane et d'un (méth)acrylate et d'un solvant contenant un sel d'acide inorganique ; et
l'irradiation de la portion revêtue (4) avec une lumière ultraviolette pour former un recouvrement formé sur la résine durcie aux ultraviolets.

7. Procédé selon la revendication 6, dans lequel le revêtement et l'irradiation aux ultraviolets sont réalisés tout en tournant le fil en plomb (1).

8. Procédé selon la revendication 6, dans lequel la composition d'une résine durcie aux ultraviolets comprend en outre un accélérateur de durcissement anaérobie.

9. Procédé selon la revendication 8, dans lequel, lorsque le diamètre extérieur du fil en plomb (1) n'est pas inférieur à 0,6 mm, une composition, qui comprend 45 à 55 % en masse de l'acrylate d'uréthane et 20 à 30 % en masse du (méth)acrylate et a une viscosité de 15 000 à 30 000 mPa·s, est utilisée en tant que composition, d'une résine durcie aux ultraviolets, à revêtir sur la portion (4) à proximité de la zone de soudure, tandis que, lorsque le diamètre extérieur du fil en plomb (1) est inférieur à 0,6 mm, une composition, qui comprend 40 à 50 % en masse de l'acrylate d'uréthane et 30 à 40 % en masse du (méth)acrylate et a une viscosité de 5 000 à 15 000 mPa·s, est utilisée en tant que composition, d'une résine durcie aux ultraviolets, à revêtir sur la portion (4) à proximité de la zone de soudure.

10. Procédé selon l'une quelconque des revendications 6 à 9, dans lequel la composition d'une résine durcie aux ultraviolets comprend 1,0 à 5,0 % en masse d'un élément de photopolymérisation.

11. Procédé selon l'une quelconque des revendications 6 à 10, dans lequel le solvant contenant un sel d'acide inorganique est choisi dans le groupe consistant en les silicates, les borates, les phosphates condensés, les sulfates, les carbonates, les bicarbonates, le borate d'ammonium, le phosphate d'ammonium, et un mélange de deux ou plus de ceux-ci.

12. Condensateur électrolytique en aluminium utilisant une cosse à languette selon l'une quelconque des revendications 1 à 5.
